# DEMANDE DE BREVET EUROPEEN

(11) **EP 1 591 288 A1**
(43) Date de publication de la demande: **02.11.2005**
(21) Numéro de dépôt: 05300254.9
(22) Date de dépôt: 07.04.2005
(51) Int. Cl.: B60J 5/10

(54) **Etanchéité de charnière d'abattant de coffre ou de hayon pour véhicule automobile**

(30) Priorité: 28.04.2004 FR 0404524
(71) Demandeur: Renault s.a.s., 92100 Boulogne Billancourt (FR)
(72) Inventeur: Letocart, Guillaume, 78114 Magny les Hameaux (FR); Ben-Mohamed, Mohamed, 92290 Chatenay Malabry (FR)

(57) **Abrégé**

Ce dispositif d'étanchéité est destiné à assurer une étanchéité entre l'abattant (30) et la traverse inférieure (24) d'un hayon d'un véhicule automobile au niveau d'une ouverture formée dans la traverse (24) pour le passage d'une charnière (31) lié à l'abattant (30). Le dispositif comprend un obturateur réducteur (40) fixé sur ladite ouverture (27) et comportant un passage réduit (42) pour la charnière mobile (31), et un tampon (50) en caoutchouc lié à la charnière (31) de manière qu'il vienne s'appliquer avec étanchéité sur l'obturateur (40) pour fermer ledit passage quand l'abattant (30) est en position fermée.

## Description

La présente invention concerne un dispositif d'étanchéité de charnière d'abattant de coffre ou de hayon pour véhicule automobile.

On appelle ici abattant un ouvrant de véhicule placé à l'arrière du véhicule et articulé horizontalement en partie basse pour s'ouvrir par le haut.

Une tel ouvrant était prévu sur les « Austin Mini» pour fermer le coffre arrière ou sur les « Fiat 500 » pour fermer le moteur placé à l'arrière.

Souvent l'abattant est prévu pour former quand il est complètement ouvert et déployé, à l'aide d'un mécanisme plus ou moins compliqué, une tablette arrière prolongeant le plancher du coffre (cf. les documents FR 2793753 ; 2793754 ; EP 1053899).

L'abattant peut être plus ou moins intégré à un hayon, comme connu par les documents US 3612601 et US 6220649. Dans un premier mode d'utilisation, l'abattant est solidaire du hayon et celui-ci, incorporant donc l'abattant, s'ouvre entièrement en pivotant sur des charnières hautes, de manière classique. Dans un second mode d'utilisation, l'abattant est désolidarisé du hayon et s'ouvre indépendamment en pivotant sur des charnières basses ; le reste du hayon peut éventuellement être pivoté sur ses charnières hautes.

Dans toutes ces réalisations connues, l'articulation est réalisée par des moyens qui ne nécessitent pas d'étanchéité soignée, généralement parce qu'elle est située à des endroits plus ou moins protégés des eaux de ruissellement ou bien des endroits où le ruissellement est sans conséquence (cas des charnières extérieures des abattants des « Austin Mini » ou des « Fiat 500 »). Dans certains cas, comme pour les « Austin Mini », il est néanmoins prévu entre la carrosserie et l'ouvrant un soufflet d'étanchéité, en forme de tube accordéon, destiné à la circulation de câbles (par exemple destinés à l'éclairage de plaque arrière). Une telle solution est relativement grossière et fragile et ne s'appliquerait pas aisément à la protection d'une charnière au cas ou celle-ci serait souhaitée.

Selon une disposition avantageuse d'abattant développée par la Demanderesse, l'abattant est monté sur la traverse inférieure d'un cadre du hayon. L'abattant est donc articulé sur le hayon par une charnière intérieure en partie cachée dans la traverse, et non plus extérieurement sur la carrosserie comme dans les solutions antérieures. À cet effet, la traverse forme un caisson qui contient les axes de pivotement des deux charnières de l'abattant ; des ouvertures de passage de charnière sont prévues dans une surface du caisson formant la traverse, orientée vers le haut et donc exposée aux eaux de ruissellement. Ces ouvertures sont suffisamment grandes pour non seulement permettre le passage des charnières en mouvement, mais aussi permettre leur montage et le passage de la tête de visseuse pour le vissage de la charnière dans le caisson de hayon. Il est donc important d'assurer l'étanchéité de ces ouvertures pour éviter le remplissage du caisson (ce qu'évite en partie des trous prévus à la base du caisson) mais aussi la corrosion du caisson ainsi que des problèmes avec les équipements électriques contenus dans le caisson.

Aucun document d'art antérieur n'envisage un dispositif d'étanchéité spécifique destiné à assurer une étanchéité entre l'ouvrant et le dormant d'une carrosserie automobile au niveau d'une ouverture du dormant prévue pour le passage d'un organe mobile lié à l'ouvrant, notamment une charnière intérieure d'abattant. Tel est le but que se fixe l'invention.

Ce but est atteint grâce à l'invention qui propose donc un dispositif d'étanchéité destiné à assurer une étanchéité entre l'ouvrant et le dormant d'une carrosserie automobile au niveau d'une ouverture du dormant prévue pour le passage d'un organe mobile lié à l'ouvrant, l'ouvrant étant sous forme d'abattant, caractérisé en ce que le dispositif comprend un obturateur réducteur fixé sur ladite ouverture et comportant un passage réduit pour ledit organe mobile, et un tampon lié à l'organe mobile de manière qu'il vienne s'appliquer avec étanchéité sur l'obturateur pour fermer ledit passage quand l'ouvrant est en position fermée sur le dormant.

L'obturateur réducteur est un plateau rigide ou semi-rigide, avantageusement encliqueté dans l'ouverture. Il est ainsi monté une fois pour toutes sur le dormant. Il comporte avantageusement un muret de protection contre le ruissellement, au moins au-dessus et de préférence aussi sur les côtés du passage d'organe mobile. Ainsi, même quand l'abattant est ouvert et que le tampon n'est pas appliqué contre l'obturateur, le muret détourne les ruissellements qui pourraient faire pénétrer de l'eau dans le dormant.

Le tampon est rendu solidaire de l'organe mobile d'une manière étanche ou sensiblement étanche. Avantageusement, le tampon est réalisé dans une matière plastique relativement molle et élastique, telle qu'un caoutchouc, et comporte un orifice de passage, dans lequel l'organe mobile peut être retenu de manière ajustée. On entend par matière relativement molle toute matière suffisamment souple pour se déformer, par exemple ici de quelques millimètres, et suffisamment rigide pour avoir une bonne stabilité dimensionnelle sous effort de fermeture classique d'un ouvrant de véhicule. Si l'organe mobile se présente sous forme d'une lame ou d'une barre plate, l'orifice de passage peut consister en une simple fente. L'organe mobile peut comporter une partie d'étranglement permettant de venir y fixer l'orifice de passage du tampon. Avantageusement, l'orifice de passage est entouré par deux oreilles de préhension, facilitant le montage du tampon sur l'organe mobile.

Le tampon comporte avantageusement un relief souple, tel qu'un tube déformable, coopérant avec l'abattant pour plaquer le tampon sur l'obturateur quand l'abattant est fermé.

L'invention s'applique en particulier au cas où le dormant est formé par la traverse inférieure d'un cadre de hayon articulé en partie en partie supérieure et où l'organe lié à l'abattant est une charnière dont une extrémité pivote dans ladite traverse inférieure et l'autre extrémité est fixée à l'abattant.

D'autres caractéristiques et avantages de l'invention ressortiront de la description suivante d'un exemple de réalisation. Il sera fait référence aux dessins annexés sur lesquels :
La figure 1 est une vue de côté d'un véhicule équipé d'un abattant incorporé dans un hayon, auquel s'applique l'invention, le hayon étant montré en position fermée et l'abattant étant montré en position ouverte.
La figure 2 est une vue analogue à la figure 1, le hayon qui incorpore l'abattant étant montré en position relevée.
La figure 3 est une vue de face du bas du hayon du véhicule de la figure 1, montrant l'emplacement dans lequel vient se loger l'abattant.

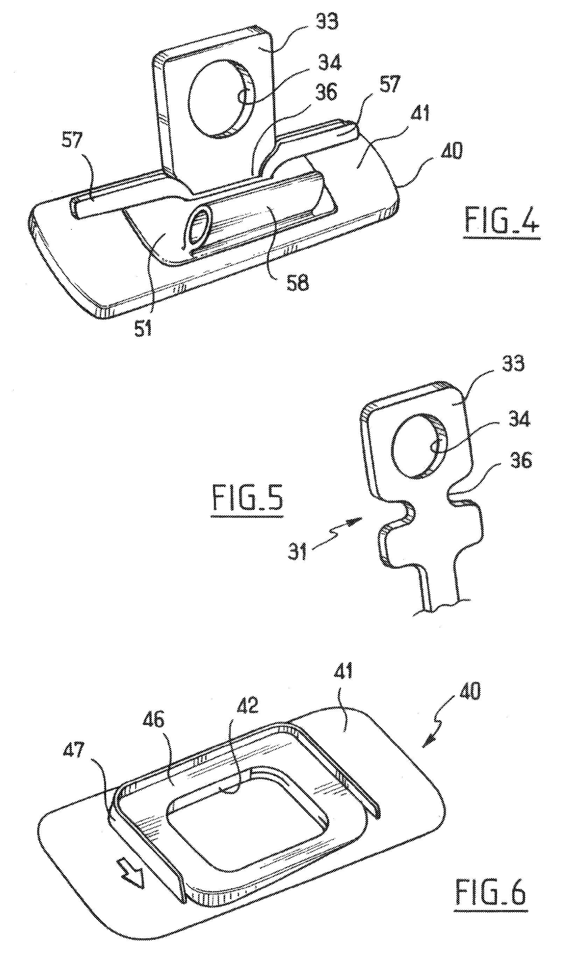

La figure 4 est une vue en perspective des deux éléments du dispositif d'étanchéité, obturateur et tampon, venant équiper chaque charnière de l'abattant du véhicule de la figure 1.
La figure 5 est une vue en perspective de détail de l'extrémité de la charnière traversant le dispositif d'étanchéité de la figure 4.
La figure 6 est une vue en perspective de dessus de l'obturateur du dispositif de la figure 4.

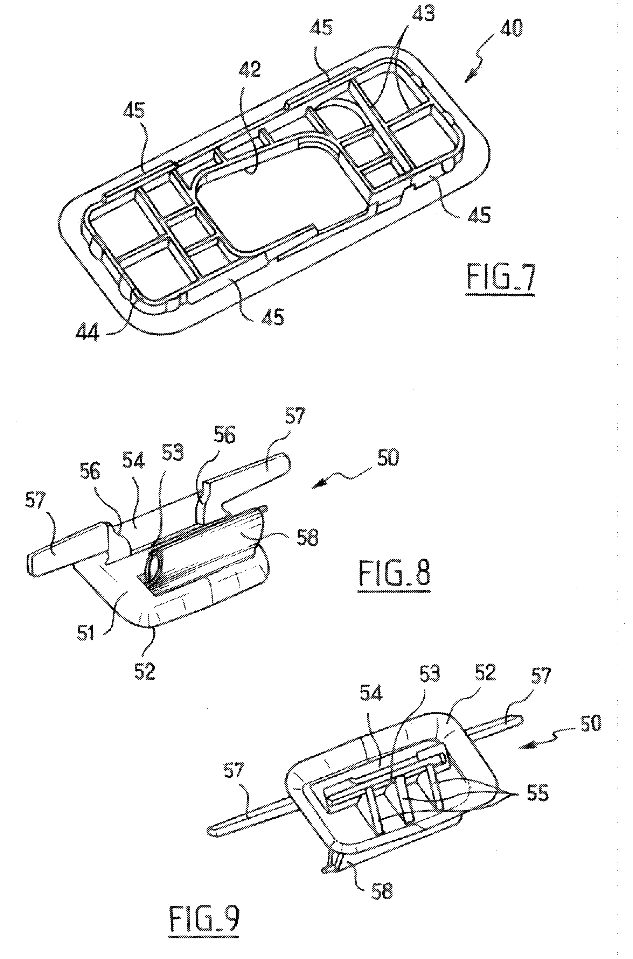

La figure 7 est une vue en perspective de dessous de l'obturateur du dispositif de la figure 4.
La figure 8 est une vue en perspective de dessus du tampon du dispositif de la figure 4.
La figure 9 est une vue en perspective de dessous du tampon du dispositif de la figure 4.
La figure 10 est une vue en coupe verticale à travers une charnière du hayon de la figure 1, montrant en place le dispositif d'étanchéité de la figure 4.

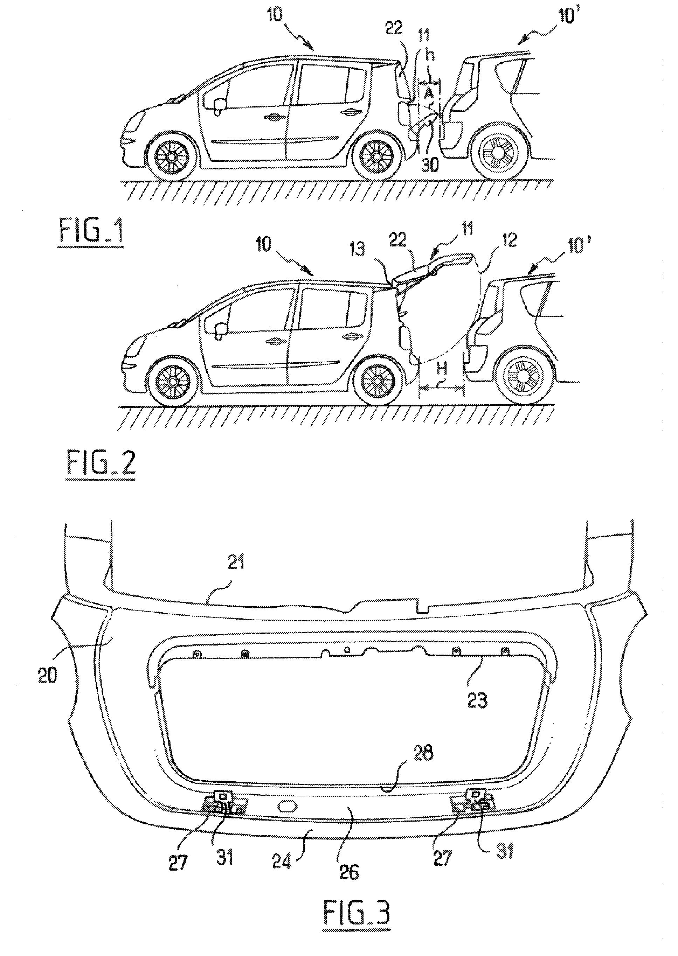

Les figures 1 et 2 montrent deux véhicules 10 et partiellement 10' garés l'un derrière l'autre. L'arrière du véhicule 10 comporte un hayon 11 qui est articulé sur des charnières 13 placées en position haute et est intégralement relevable. Pour permettre son pivotement complet, nécessitant une enveloppe libre 12, il convient de réserver entre l'arrière du véhicule 10 et le véhicule 10' (ou un obstacle quelconque, tel qu'un mur de garage) placé derrière, une certaine distance H, par exemple de 60 à 70 cm.

Dans le véhicule 10 conforme à l'invention, le hayon relevable 11 comporte un cadre en caisson 20 (cf. figure 3) dont une ouverture supérieure 21 est occupée par la lunette arrière 22 et dont une ouverture inférieure 23 est équipée d'un abattant 30 articulé sur des charnières 31 placées en position basse, dans la traverse inférieure 24 en caisson du cadre 20.

De la sorte et comme représenté sur la figure 1, l'abattant 30 peut s'ouvrir vers le haut indépendamment du hayon 11 en pivotant sur son articulation basse, d'un angle A qui peut être relativement limité, par exemple à environ 50°, angle suffisant pour permettre d'introduire dans le coffre arrière des objets. L'ouverture de l'abattant 30 nécessite à l'arrière un dégagement h, par exemple d'une trentaine de centimètres, inférieur de moitié à H.

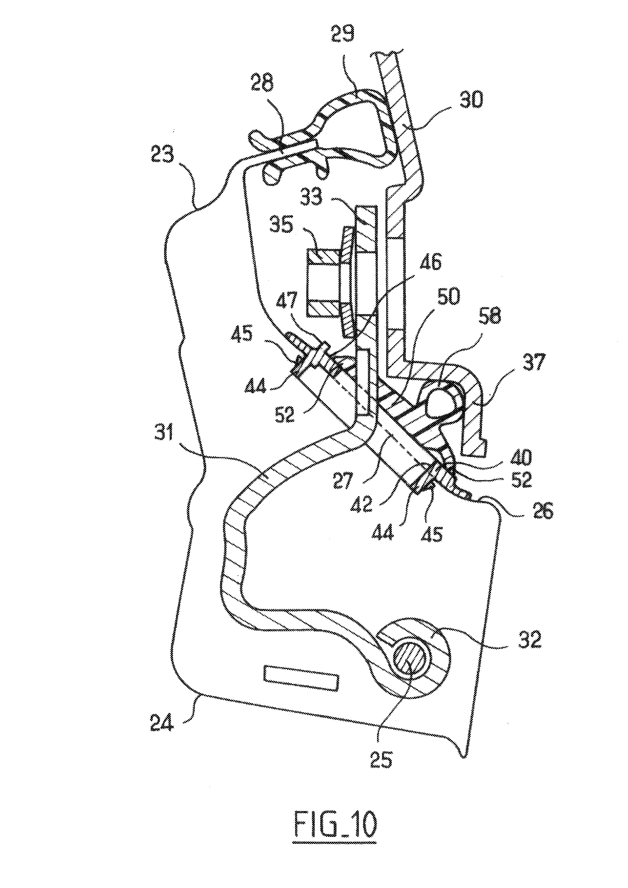

Pour l'articulation de l'abattant 30 dans le hayon 11, les deux charnières 31 pivotent grâce à une extrémité 32 (cf. figure 10) formant palier sur des axes horizontaux 25 logés dans le caisson de la traverse inférieure 24. Les charnières, constituées d'une barre métallique plate et mise en forme, traversent dans leur partie centrale une ouverture rectangulaire 27 formée dans une paroi oblique 26 de la traverse 24 et se terminent par une patte plate élargie 33 comportant un trou 34 de fixation de l'abattant 30 grâce par exemple à des moyens de vissage partiellement représentés 35. La patte élargie 33 est précédée d'un étranglement 36 destiné à la fixation du tampon d'obturateur comme on l'expliquera plus loin.

L'abattant 30 comporte naturellement une serrure et des moyens d'ouverture non représentés de façon à pouvoir alternativement l'ouvrir comme représenté figure 1 ou venir le plaquer contre les bords de l'ouverture 23 du hayon et l'immobiliser. L'ouverture 23 peut former au niveau de la traverse inférieure 24 une lèvre 28 dirigée vers l'extérieur et garnie d'un profilé 29 d'étanchéité, par exemple en caoutchouc ou similaire, destiné à recevoir avec compression la paroi intérieure de l'abattant 30 quand il est fermé sur le hayon 1 (cf. figure 10).

Afin d'assurer en toutes circonstances au niveau des ouvertures 27 l'étanchéité du caisson formant la traverse inférieure 24, l'invention prévoit un dispositif d'étanchéité composé de deux éléments respectivement fixe, l'obturateur 40 lié à la traverse, et mobile, le tampon 50 lié à la patte 33 de charnière 31 et donc à l'abattant 30 pivotant sur la traverse.

L'obturateur réducteur 40 est destiné à fermer l'ouverture 27 tout en laissant un étroit passage pour la charnière. Moulé dans une matière rigide ou semi-rigide, il se compose d'un plateau sensiblement rectangulaire 41 plus grand que l'ouverture 27 et destiné à la masquer, comportant en son milieu un passage rectangulaire délimité 42. La face inférieure de l'obturateur comprend des nervures de raidissement 43 et une nervure rectangulaire 44 conformée sensiblement à l'ouverture 27 et comportant sur certains de ses côtés extérieurs des reliefs d'encliquetage 45 assurant le clipsage de l'obturateur dans et sur l'ouverture 27. Le passage 42 est entouré d'une surface périphérique d'appui 46 destiné à former le siège du tampon 50 et entourée au moins sur trois côtés (les côtés supérieur et latéraux) d'un muret 47 détournant les ruissellements éventuels. La surface d'appui 46 se surélève légèrement en oblique par rapport à la surface du plateau 41.

Le tampon 50 moulé en dans une matière plastique souple d'étanchéité (par exemple un caoutchouc de type EPDM), comporte un plateau 51 rectangulaire formant au bord et vers l'arrière une lèvre d'application 52 destinée à venir s'appuyer contre la surface d'appui 46 de l'obturateur 40. Dans le plateau 51 est formé, obliquement par rapport au plan du plateau 51, un passage allongé étroit ou fente 53 destiné à la traversée de la patte de la charnière 31. Ce passage 53 est délimité sur un des bords allongés par une paroi inclinée 54. Sous l'autre bord, des triangles moulés 55 forment un guidage de la patte de charnière. Les deux extrémités du passage allongé 53 forme des courbes 56 d'appui du rétrécissement 36 de la patte 31 de charnière et se prolongent latéralement par des oreilles 57 de préhension. Les oreilles 57 facilitent le montage du tampon 50 sur la charnière 31, en particulier pour ouvrir la fente 53 en vue du passage de la patte élargie 33. Le plateau 51 comporte aussi, de moulage, un profil tubulaire 58 d'étanchéité destiné à venir s'écraser contre le bord inférieur 37 de l'abattant 30 (cf. figure 10) lorsque l'abattant 30 est fixé sur la charnière 31 équipée du tampon 50. L'effort d'appui du tampon 50 sur l'obturateur 40 est ainsi optimisé.

Comme le montre la figure 10, la coopération du tampon 50 et de l'obturateur 40 assure, quand l'abattant 30 est fermé, une parfaite étanchéité des ouvertures 27 de passage de charnière à l'égard des éventuelles eaux de ruissellement qui chemineraient sur la surface inclinée 26. Quand l'abattant 30 est provisoirement ouvert, le tampon 50 n'assure plus l'étanchéité mais néanmoins le muret 47 détourne suffisamment les éventuelles eaux de ruissellement.

## Revendications

1. Dispositif d'étanchéité destiné à assurer une étanchéité entre l'ouvrant (30) et le dormant (24) d'une carrosserie d'un véhicule automobile (10) au niveau d'une ouverture (27) formée dans le dormant (24) pour le passage d'un organe mobile (31) lié à l'ouvrant (30), l'ouvrant (30) étant sous forme d'abattant, **caractérisé en ce que** le dispositif comprend un obturateur réducteur (40) fixé sur ladite ouverture (27) et comportant un passage réduit (42) pour ledit organe mobile (31), et un tampon (50) lié à l'organe mobile (31) de manière qu'il vienne s'appliquer avec étanchéité sur l'obturateur (40) pour fermer ledit passage quand l'ouvrant (30) est en position fermée sur le dormant (24).

2. Dispositif d'étanchéité selon la revendication 1, **caractérisé en ce que** l'obturateur (40) comporte un plateau rigide ou semi-rigide (41).

3. Dispositif d'étanchéité selon la revendication 2, **caractérisé en ce que** l'obturateur (40) est encliqueté dans l'ouverture (27).

4. Dispositif d'étanchéité selon l'une quelconque des revendications 1 à 3, **caractérisé en ce que** l'obturateur (40) comporte un muret de protection (47) contre le ruissellement au moins au-dessus du passage d'organe mobile (31).

5. Dispositif d'étanchéité selon l'une quelconque des revendications 1 à 4, **caractérisé en ce que** le tampon (50) est rendu solidaire de l'organe mobile (31) d'une manière étanche.

6. Dispositif d'étanchéité selon l'une quelconque des revendications 1 à 5, **caractérisé en ce que** le tampon (5) est réalisé dans une matière plastique relativement molle et élastique, telle qu'un caoutchouc, et comporte un orifice de passage (53) dans lequel l'vrgane mobile (10) peut être retenu de manière ajustée.

7. Dispositif selon la revendication 6, **caractérisé en ce que** l'organe mobile (31) comporte une partie d'étranglement (36) permettant de venir y fixer l'orifice (53) de passage du tampon.

8. Dispositif d'étanchéité selon l'une quelconque des revendications 6 ou 7, **caractérisé en ce que** le tampon (50) comporte un relief souple (58) coopérant avec l'abattant (30) pour plaquer le tampon (50) sur l'obturateur (40) quand l'abattant est fermé.

9. Dispositif selon l'une quelconque des revendications 6 à 8, **caractérisé en ce que** l'orifice de passage (53) est entouré par deux oreilles de préhension (57).

10. Dispositif d'étanchéité selon l'une quelconque des revendications 1 à 9, **caractérisé en ce que** le dormant est formé par la traverse inférieure (24) d'un cadre de hayon (20).

11. Dispositif d'étanchéité selon l'une quelconque des revendications 1 à 10, **caractérisé en ce que** l'organe lié à l'abattant (30) est une charnière (31).
